# EUROPEAN PATENT APPLICATION

(11) **EP 4 368 907 A1**
(43) Date of publication of application: **15.05.2024**
(21) Application number: 22837497.1
(22) Date of filing: 23.06.2022
(51) Int. Cl.: F24F 11/63

(54) **SYSTEM, SERVER, AND METHOD**

(30) Priority: 09.07.2021 JP 2021114549
(71) Applicant: Daikin Industries, Ltd., Osaka-shi, Osaka 530-0001 (JP)
(72) Inventor: TSUBOI, Kosuke, Osaka-shi, Osaka 530-0001 (JP); OHASHI, Yu, Osaka-shi, Osaka 530-0001 (JP); OCHI, Yasutaka, Osaka-shi, Osaka 530-0001 (JP)
(74) Representative: Hoffmann Eitle
(86) International application number: PCT/JP2022/025125
(87) International publication number: WO 2023/282080

(57) **Abstract**

Facilitates the management of data without having the developer or the like of the air conditioner register the data model of the air conditioner. A system includes an air conditioner; a terminal configured to communicate with the air conditioner; and a server configured to communicate with the terminal, wherein the terminal includes a control unit configured to acquire, from the air conditioner, a data model indicating a data structure of data collected by the air conditioner, and transmit the data model to the server.

## Description

### Technical Field

The present disclosure relates to a system, a server, and a method.

### Background Art

Conventionally, a system is known in which a server acquires operation data of an air conditioner to monitor and control the air conditioner. The server acquires data collected by each air conditioner from various air conditioners (Patent Document 1).

### Citation List

### Patent Document

[Patent document 1] Japanese Unexamined Patent Application Publication No. 2021-085578

### Summary of Invention

### Technical Problem

However, the data collected by the air conditioner varies depending on the type, combination, and number of air conditioners. Therefore, information (hereinafter also referred to as a data model) indicating the data structure of the data collected by all air conditioners must be registered in advance in the server, and the developer or the like of the air conditioner must register the data model in the server every time the developer develops an air conditioner. The purpose of the present disclosure is to facilitate the management of data without having the developer or the like of the air conditioner register the data model of the air conditioner.

### Solution to Problem

A system according to a first aspect of the present disclosure includes
an air conditioner;
a terminal configured to communicate with the air conditioner; and
a server configured to communicate with the terminal, wherein
the terminal includes a control unit configured to
   acquire, from the air conditioner, a data model indicating a data structure of data collected by the air conditioner, and
   transmit the data model to the server.

According to the first aspect of the present disclosure, management of data collected by the air conditioner can be facilitated.

Further, a second aspect of the present disclosure is the system according to the first aspect of the present disclosure, wherein
the data is collected by at least one of a component included in the air conditioner or a sensor attached to the air conditioner, and
the data structure is a tree structure in accordance with a structure of at least one of the component or the sensor.

According to a second aspect of the present disclosure, the data collected by the air conditioner can be managed in accordance with a structure of at least one of the component or the sensor.

Further, a third aspect of the present disclosure is the system according to the first or second aspect of the present disclosure, wherein the data model indicates attribute information of the data.

According to a third aspect of the present disclosure, attribute information of data collected by the air conditioner can be managed.

Further, a fourth aspect of the present disclosure is the system according to any one of the first to third aspects of the present disclosure, wherein the server includes a database for managing the data model.

According to a fourth aspect of the present disclosure, the data model can be managed by a database of the server.

Further, a fifth aspect of the present disclosure is the system according to the fourth aspect of the present disclosure, wherein the control unit of the server determines whether the data model received from the terminal is stored in the database.

According to the fifth aspect of the present disclosure, it is possible to determine whether the data model is already managed in the database of the server.

Further, a sixth aspect of the present disclosure is the system according to the fifth aspect of the present disclosure, wherein the control unit of the server registers, in the database, the data model received from the terminal, when the data model received from the terminal is not stored in the database.

According to the sixth aspect of the present disclosure, when the data model not registered in the database of the server is acquired, the data model can be added to the database and managed.

Further, a seventh aspect of the present disclosure is the system according to any one of the first to sixth aspects of the present disclosure, wherein
the air conditioner includes a plurality of outdoor units and one or more indoor units, and
the control unit of the terminal or a control unit of the server manages a plurality of the data models acquired from the plurality of outdoor units, as one data model.

According to a seventh aspect of the present disclosure, duplicate data need not be managed.

Further, an eighth aspect of the present disclosure is the system according to the seventh aspect of the present disclosure, wherein the control unit of the terminal or the control unit of the server manages data common among the plurality of the data models acquired from the plurality of outdoor units, as one piece of data.

According to the eighth aspect of the present disclosure, duplicate data need not be managed.

A sever according to a ninth aspect of the present disclosure includes
a control unit, wherein
the control unit receives, from a terminal, a data model indicating a data structure of data collected by an air conditioner.

A method according to a tenth aspect of the present disclosure is executed by a system, the system including an air conditioner, a terminal, and a server, the method including:
a step of acquiring, by the terminal from the air conditioner, a data model indicating a data structure of data collected by the air conditioner;
a step of transmitting, by the terminal, the data model to the server; and
a step of receiving, by the server, the data model from the terminal.

### Brief Description of Drawings

[FIG. 1] FIG. 1 is a diagram illustrating an overall configuration according to an embodiment of the present disclosure.
[FIG. 2] FIG. 2 is a diagram illustrating a hardware configuration of a terminal (communication adapter) according to an embodiment of the present disclosure.
[FIG. 3] FIG. 3 is a diagram illustrating a hardware configuration of a server according to an embodiment of the present disclosure.
[FIG. 4] FIG. 4 is a sequence diagram of processing executed by an air conditioning system according to an embodiment of the present disclosure.
[FIG. 5] FIG. 5 is a diagram for explaining a data model of an air conditioner according to an embodiment of the present disclosure.
[FIG. 6] FIG. 6 is an example of a data model of an air conditioner according to an embodiment of the present disclosure.
[FIG. 7] FIG. 7 is a diagram for explaining a data model of an air conditioner having a plurality of outdoor units according to an embodiment of the present disclosure.
[FIG. 8] FIG. 8 is an example of a data model of an air conditioner having a plurality of outdoor units according to an embodiment of the present disclosure.
[FIG. 9] FIG. 9 is an example of a data model of an air conditioner according to an embodiment of the present disclosure.

### Description of Embodiments

Embodiments of the present disclosure will be described below based on the drawings.

### <Explanation of terminology>

- In the present specification, "data model" is information indicating the data structure of the data collected by the air conditioner. The data collected by the air conditioner is data collected by at least one of a component of the air conditioner or a sensor attached to the air conditioner. For example, the data structure is a tree structure according to a structure of at least one of a component of the air conditioner or a sensor attached to the air conditioner. The data structure is not limited to a tree structure, and may be a collection of items of data collected by the air conditioner. The data model indicates attribute information of data collected by the air conditioner. By using the data model, data collected by various air conditioners can be handled in a unified format.
- In the present specification, a "communication adapter" is a terminal having a control function and a communication function. The communication adapter can acquire the data model of the air conditioner from a heat source side device (outdoor unit) of the air conditioner and transmit the data model of the air conditioner to a server. The communication adapter is an example of a terminal.

### <System configuration>

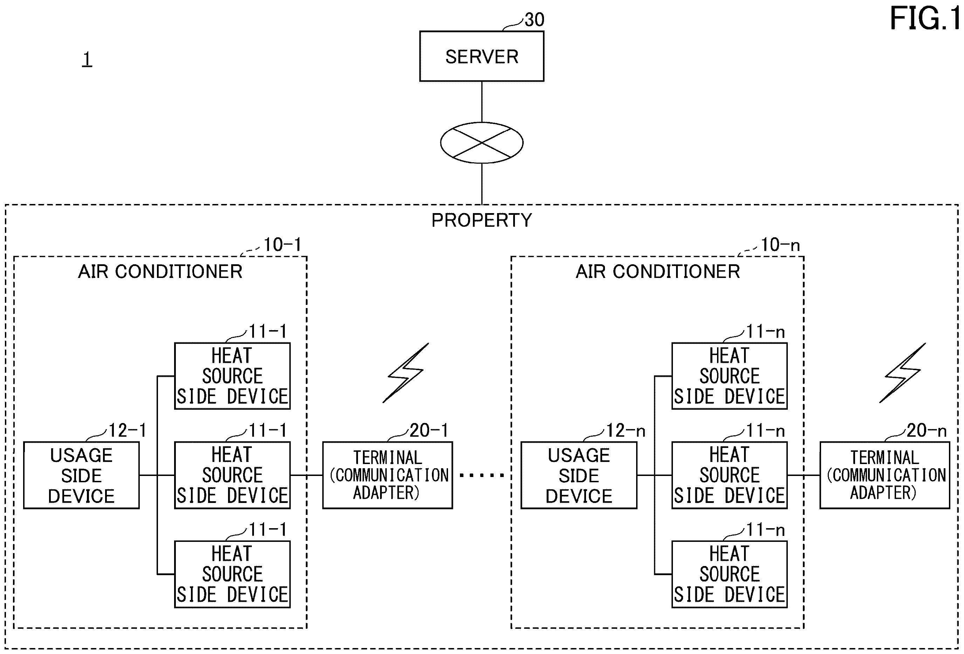

FIG. 1 is a diagram illustrating an overall configuration according to an embodiment of the present disclosure. It is assumed that an air conditioner 10-1, ... and an air conditioner 10n (n is an integer greater than or equal to 1) are installed in a property.

A property is a place where an air conditioner is installed. For example, a property is a building, a floor in a building, etc. One or more air conditioners are installed in one property.

As illustrated in FIG. 1, an air conditioning system 1 includes the air conditioner 10-1, ..., the air conditioner 10n (hereinafter, the air conditioner 10-1, ..., the air conditioner 10n are collectively referred to as the air conditioner 10), a terminal (communication adapter) 20-1, ..., a terminal (communication adapter) 20n (hereinafter, the terminal (communication adapter) 20-1, ..., the terminal (communication adapter) 20n are collectively referred to as the terminal (communication adapter) 20), and a server 30. Each of these elements will be described below.

### <<Air conditioner>>

The air conditioner 10 is any type of air conditioner. The air conditioner 10-1, ..., the air conditioner 10n include a heat source side device 11-1, ..., a heat source side device 11n (hereinafter, the heat source side device 11-1, ..., the heat source side device 11n are collectively referred to as the heat source side device 11), and a usage side device 12-1, ..., and a usage side device 12n (hereinafter, the usage side device 12-1, ..., and the usage side device 12n are collectively referred to as the usage side device 12), respectively. The air conditioner 10 has one or more heat source side devices 11 and one or more usage side devices 12. The heat source side device 11 is also referred to as an outdoor unit, and the usage side device 12 is also referred to as an indoor unit.

The terminal (communication adapter) 20-1, ..., and a terminal (communication adapter) 20n are connected to the heat source side device 11-1, ..., and the heat source side device 11n, respectively.

### «Terminal (communication adapter) »

The terminal (communication adapter) 20 is a terminal having a control function and a communication function (also referred to an edge of the Internet of Things (IoT)). The terminal (communication adapter) 20 can communicate with the server 30 via wireless communication such as LTE (Long Term Evolution). The terminal (communication adapter) 20 acquires the data model of the air conditioner 10 (specifically, the heat source side device 11 and the usage side device 12) from the heat source side device 11, and transmits the data model of the air conditioner 10 to the server 30.

In one embodiment of the present disclosure, as illustrated in FIG. 1, the air conditioner 10 has one usage side device 12 (a plurality of usage side devices 12 may be used) and a plurality of heat source side devices 11 (also referred to as a multi-air conditioner having a plurality of outdoor devices). In this case, the terminal (communication adapter) 20 is connected to one heat source side device among the plurality of heat source side devices (this is referred to as the parent heat source side device; the devices other than the parent heat source side device are referred to as child heat source side devices). The terminal (communication adapter) 20 can acquire, from the parent heat source side device, data models of the parent heat source side device and the child heat source side device, and the data model of the usage side device, and transmit the data models to the server 30.

### <<Server>>

The server 30 can transmit and receive data with the terminal (communication adapter) 20 through any network. The server 30 includes one or more computers.

The server 30 manages the data model of the air conditioner 10. The server 30 has a database for managing the data model. In the database, not only the data model that is received from the terminal (communication adapter) 20 by the server 30 is registered, but also a data model created by the developer of the air conditioner 10 at the time of development may be registered by being uploaded by the developer.

The server 30 receives the data model of the air conditioner 10 from the terminal (communication adapter) 20. The server 30 determines whether the data model received from the terminal (communication adapter) 20 is stored in the database. If the data model is not stored in the database, the server 30 registers the data model received from the terminal (communication adapter) 20 in the database. If the data model is stored in the database, the server 30 stores information indicating that the air conditioner 10 is installed in the property (when the data model is registered, information indicating that it has been confirmed that the air conditioner 10 is installed in the property, is stored).

Thus, in one embodiment of the present disclosure, information indicating the data structure of the data collected by the air conditioner (data model) is registered in the database. Therefore, the data collected by each air conditioner can be handled in a uniform format for each data model, and the data collected by each air conditioner can be easily used.

### <Hardware configuration>

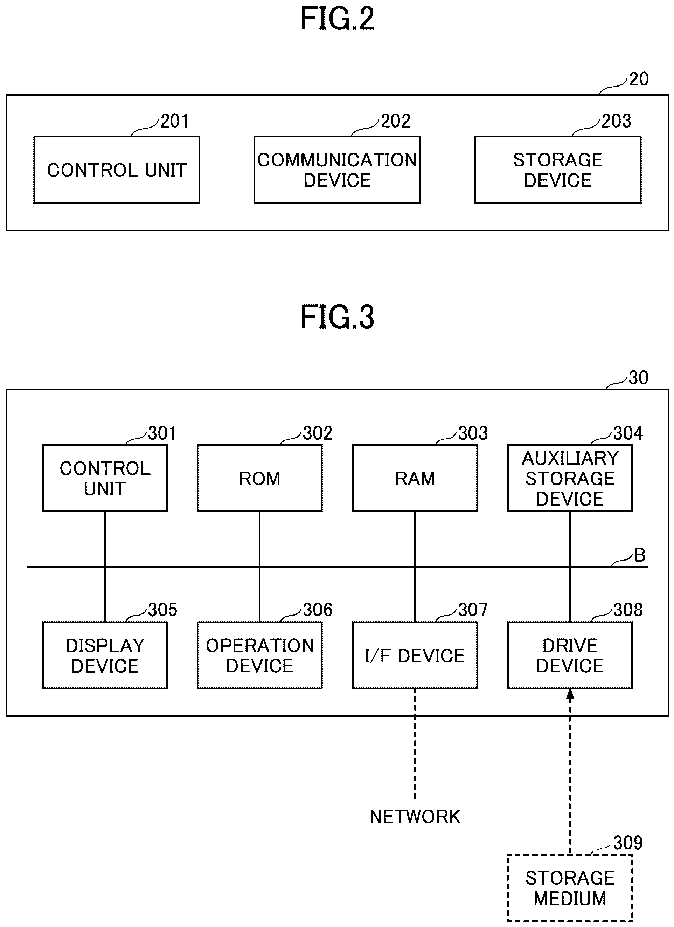

FIG. 2 is a diagram illustrating a hardware configuration of the terminal (communication adapter) 20 according to an embodiment of the present disclosure. The terminal (communication adapter) 20 includes a control unit 201, a communication device 202, and a storage device 203.

The control unit 201 is a processor such as a CPU (Central Processing Unit). Each of the processes described in the present specification is performed by the control unit 201 executing a program.

The communication device 202 is a transmitter and a receiver that communicates with a server 30 or the like via an arbitrary network (for example, wireless communications such as LTE).

The storage device 203 is a memory in which the control unit 201 stores data.

FIG. 3 is a diagram illustrating a hardware configuration of the server 30 according to an embodiment of the present disclosure. The server 30 includes a control unit 301, a ROM (Read Only Memory) 302, and a RAM (Random Access Memory) 303. The control unit 301, the ROM 302, and the RAM 303 form what is referred to as a computer.

The server 30 may also include an auxiliary storage device 304, a display device 305, an operation device 306, an I/F (interface) device 307, and a drive device 308. The hardware of the server 30 is connected to each other via a bus B.

The control unit (for example, CPU) 301 is a computing device that executes various programs installed in the auxiliary storage device 304. Each of the processes described in the present specification is performed by executing a program by the control unit 301.

The ROM 302 is a non-volatile memory. The ROM 302 functions as a main storage device for storing various programs, data, etc., necessary for the control unit 301 to execute various programs installed in the auxiliary storage device 304. Specifically, the ROM 302 functions as a main storage device for storing boot programs such as BIOS (Basic Input/Output System) and EFI (Extensible Firmware Interface).

The RAM 303 is a volatile memory such as DRAM (Dynamic Random Access Memory) and SRAM (Static Random Access Memory). The RAM 303 functions as a main storage device that provides a work area that is expanded when various programs installed in the auxiliary storage device 304 are executed by the control unit 301.

The auxiliary storage device 304 is an auxiliary storage device that stores various programs and information used when various programs are executed.

The display device 305 is a display device for displaying the internal state or the like of the server 30.

The operation device 306 is an input device for inputting various instructions to the server 30 by an operator of the server 30.

The I/F device 307 is a communication device for connecting to a network and communicating with other devices.

The drive device 308 is a device for setting a storage medium 309. The storage medium 309 includes a medium for recording information optically, electrically or magnetically, such as a CD-ROM, a flexible disk, a magneto-optical disk or the like. The storage medium 309 may include a semiconductor memory or the like for recording information electrically, such as a ROM, a flash memory or the like.

The various programs installed in the auxiliary storage device 304 are installed, for example, when a distributed storage medium 309 is set in the drive device 308 and the various programs recorded in the storage medium 309 are read out by the drive device 308. Alternatively, the various programs installed in the auxiliary storage device 304 may be installed by being downloaded from the network via the I/F device 307.

### <Processing method>

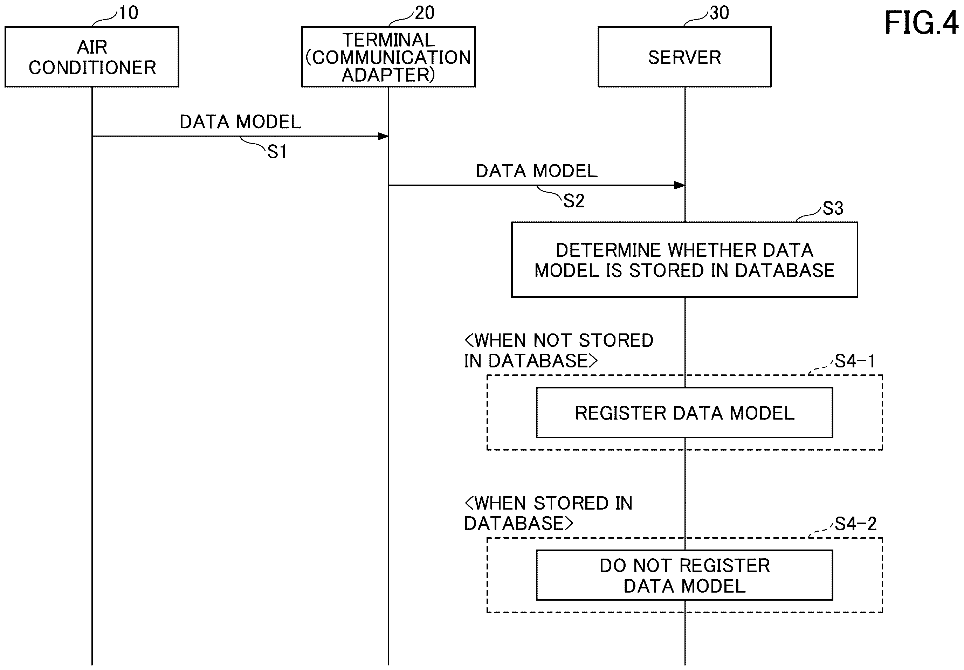

FIG. 4 is a sequence diagram of processing executed by the air conditioning system 1 according to an embodiment of the present disclosure.

In step 1 (S1), the control unit 201 of the terminal 20 acquires, from the air conditioner 10, a data model indicating the data structure of the data collected by the air conditioner 10.

In step 2 (S2), the control unit 201 of the terminal 20 transmits the data model acquired in S1 to the server 30. The control unit 301 of the server 30 receives the data model from the terminal 20.

In step 3 (S3), the control unit 301 of a server 30 determines whether the data model received from the terminal 20 in S2 is stored in the database. The server 30 has a database for managing the data model. If the data model is not stored in the database in S3, the process proceeds to step 4-1, and if the data model is stored in the database in S3, the process proceeds to step 4-2.

In step 4-1 (S4-1), the control unit 301 of the server 30 registers the data model received from the terminal 20 in S2 in the database.

In step 4-2 (S4-2), the control unit 301 of the server 30 stores information indicating that the air conditioner 10 is installed in the property (when the data model is registered, information indicating that it has been confirmed that the air conditioner 10 is installed in the property is stored). Therefore, the server 30 can identify the data model of each air conditioner 10 installed in each property.

### <Data model of air conditioner>

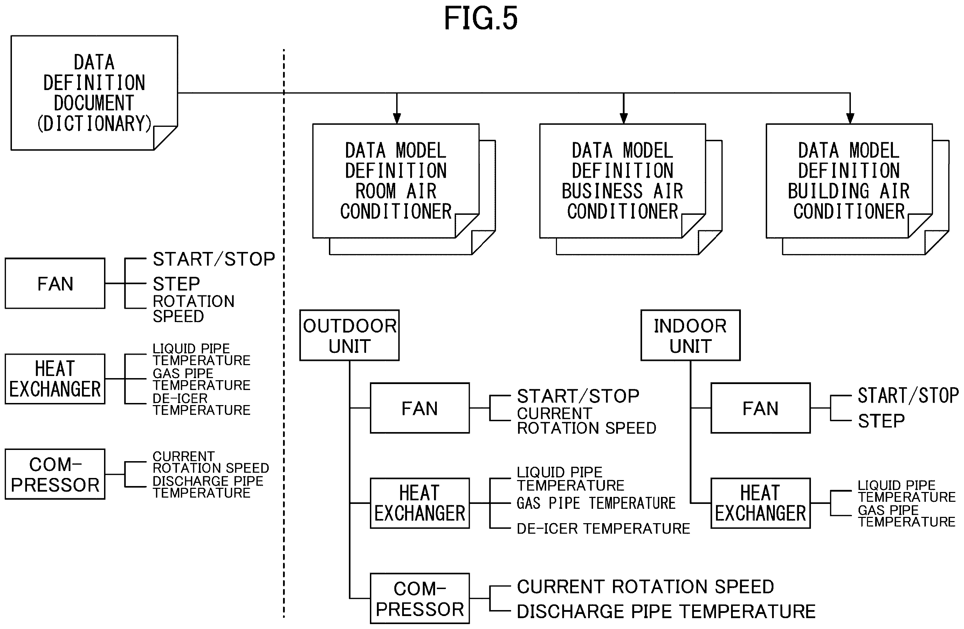

FIG. 5 is a diagram for explaining the data model of the air conditioner 10 according to an embodiment of the present disclosure. The data model indicates the data structure of the data collected by the air conditioner 10. For example, a data model for each model of the air conditioner 10 (in the example of FIG. 5, "room air conditioner", " business air conditioner", and "building air conditioner ") is created.

The lower right of FIG. 5 is an example of a data model of an outdoor unit and a data model of an indoor unit.

In the data model of an outdoor unit, there are items of "fan", "heat exchanger", and "compressor" in the lower level of "outdoor unit". In the lower level of "fan", there are items of "start/stop" and "current rotation speed". The lower level of the "heat exchanger" includes the items of "liquid pipe temperature", "gas pipe temperature", and "de-icer temperature". The lower level of the "compressor" includes the items of "current rotation speed" and "discharge pipe temperature".

Thus, the data model indicates a data structure of data (in the example of the outdoor unit illustrated in FIG. 5, "start/stop", "current rotation speed", "liquid pipe temperature", "gas pipe temperature", "de-icer temperature", "current rotation speed", and "discharge pipe temperature ") collected by at least one of a component of the air conditioner 10 or a sensor attached to the air conditioner 10 (in the example of the outdoor unit illustrated in FIG. 5, "fan", "heat exchanger", and "compressor"). The data structure has a tree structure according to the structure of at least one of a component of the air conditioner 10 or a sensor attached to the air conditioner 10 (in the example of the outdoor unit illustrated in FIG. 5, "fan", "heat exchanger", and "compressor").

In the data model of the indoor unit, there are the items of "fan" and "heat exchanger" in the lower level of the "indoor unit". There are the items of "start/stop" and "step" in the lower level of the "fan". There are the items of "liquid pipe temperature" and "gas pipe temperature" in the lower level of the "heat exchanger".

Thus, the data model indicates a data structure of data (in the example of the indoor unit illustrated in FIG. 5, "start/stop", "step", "liquid pipe temperature", and "gas pipe temperature") collected by at least one of a component of the air conditioner 10 or a sensor attached to the air conditioner 10 (in the example of the indoor unit of FIG. 5, "fan" and "heat exchanger"). The data structure has a tree structure according to the structure of at least one of a component of the air conditioner 10 or a sensor attached to the air conditioner 10 (in the example of the indoor unit illustrated in FIG. 5, "fan" and "heat exchanger").

Each data model of the air conditioner 10 is prepared in accordance with a data definition document (dictionary) (information for defining uniform data among the various air conditioners 10). Therefore, data collected by various air conditioners 10 can be handled in a uniform format.

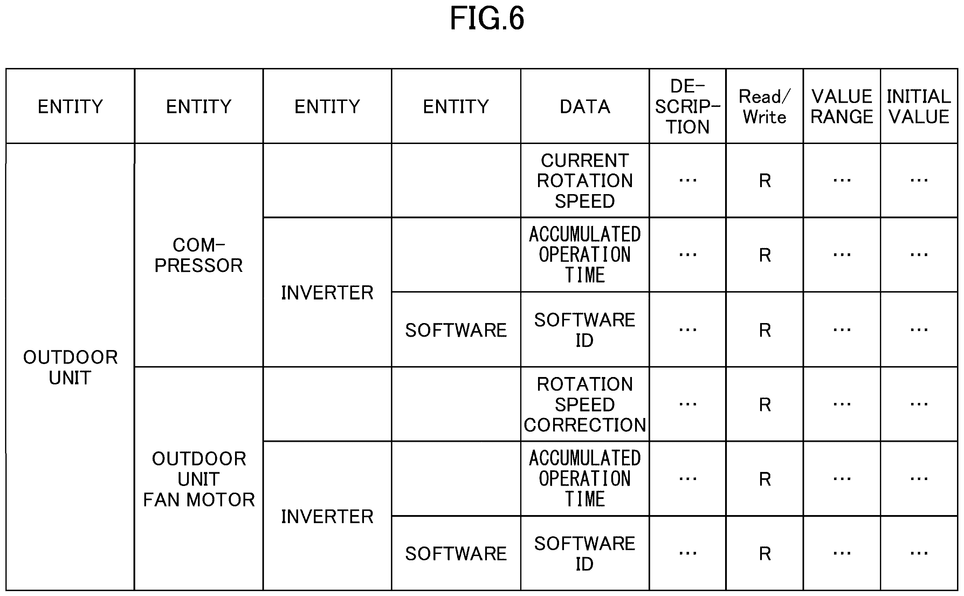

FIG. 6 is an example of a data model of the air conditioner 10 according to an embodiment of the present disclosure.

As illustrated in FIG. 6, the data structure of the data ("current rotation speed", "accumulated operation time", "software ID", "rotation speed correction", "accumulated operation time", and "software ID" stored in "data" of FIG. 6) collected by the air conditioner 10, is in accordance with a physical structure of at least one of a component of the air conditioner 10 or a sensor attached to the air conditioner 10 (each "entity" in FIG. 6). Specifically, the data model indicates that "outdoor unit" of the upper level includes "compressor" and "outdoor unit fan motor" in the lower level. The data model indicates that each of the "compressor" and the "outdoor unit fan motor" has "inverter" in the lower level, and the "inverter" has "software" in the lower level. The data model indicates that the "software" collects "software ID" in the lower level.

Data items in the data model include data acquired by various sensors (intake temperature, discharge temperature, outdoor temperature, indoor temperature, CO₂ concentration, etc.), various settings (cooling set temperature, heating set temperature, compressor frequency, valve opening/closing, fan rotation speed, etc.), and start/stop information of each air conditioner (compressor, valve, 4-section valve, indoor fan, outdoor fan, etc.). The data structure and attribute information of the data are defined for the rules when the terminal 20 outputs the data and the rules when the terminal 20 acquires the data.

### <Attribute information of the data>

Now, the attribute information of the data will be explained. The data model indicates the attribute information of the data collected by the air conditioner 10. For example, the attribute information includes the initial value, minimum value, maximum value, value range, readability, step size, etc., of the data collected by the air conditioner 10. For example, the attribute information of the data is a special control condition (for example, a special control condition for an air conditioner in a cold district). The terminal (communication adapter) 20 can transmit, to the server 30, the initial value together with the data model of the air conditioner 10. The terminal (communication adapter) 20 can periodically transmit the current value to the server 30. When the attribute information is changed (for example, when the upper limit and lower limit of the set temperature are changed by the function of the remote control of the air conditioner 10), the terminal (communication adapter) 20 can transmit the changed attribute information to the server 30 as a data model.

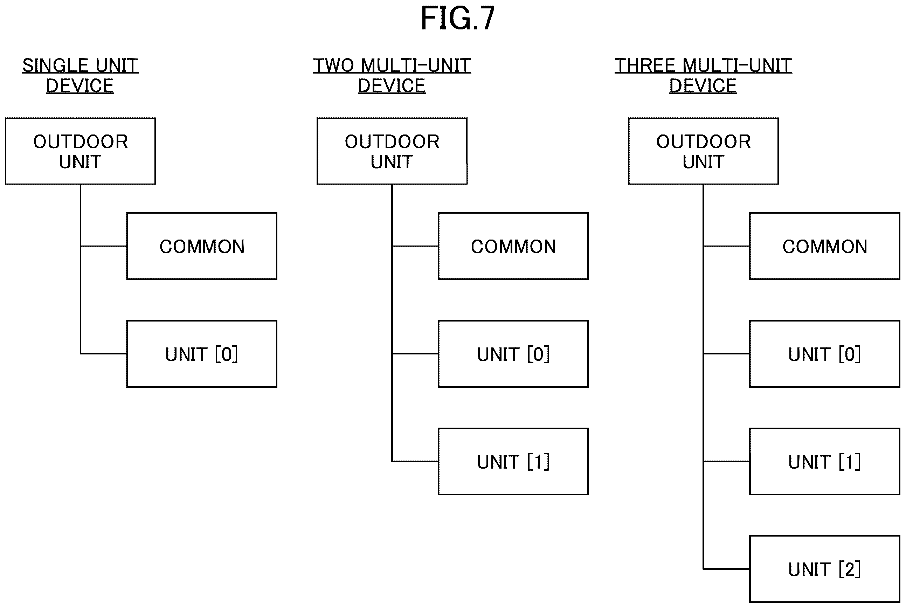

FIG. 7 is a diagram for explaining a data model of the air conditioner 10 having a plurality of outdoor units according to an embodiment of the present disclosure. When the air conditioner 10 has a plurality of outdoor units and one or a plurality of indoor units, the terminal 20 or the server 30 can manage the plurality of data models acquired from the plurality of outdoor units as one data model (registered as the data model of the air conditioner 10 having the plurality of outdoor units). Specifically, the terminal 20 or the server 30 can manage the data common to the plurality of data models acquired from the plurality of outdoor units as one piece of data.

Referring to the example of FIG. 7, the terminal 20 or the server 30 can manage the data common to the data models of the outdoor units of the "two multi-unit device (when the air conditioner 10 has two outdoor units)" as one piece of data (the "common" part of FIG. 7). The terminal 20 or the server 30 can manage data (the "unit (0) and unit (1)" parts of FIG. 7) that is not common in the data model of outdoor units of the "two multi-unit device" as separate pieces of data. The same applies to the case of the "three multi-unit device (when the air conditioner 10 has three outdoor units)" or a device with four or more units. In this way, in a "single unit device", a "two multi-unit device", a "three multi-unit device", ..., etc., data common among the outdoor units and data not common among the outdoor units are separately managed.

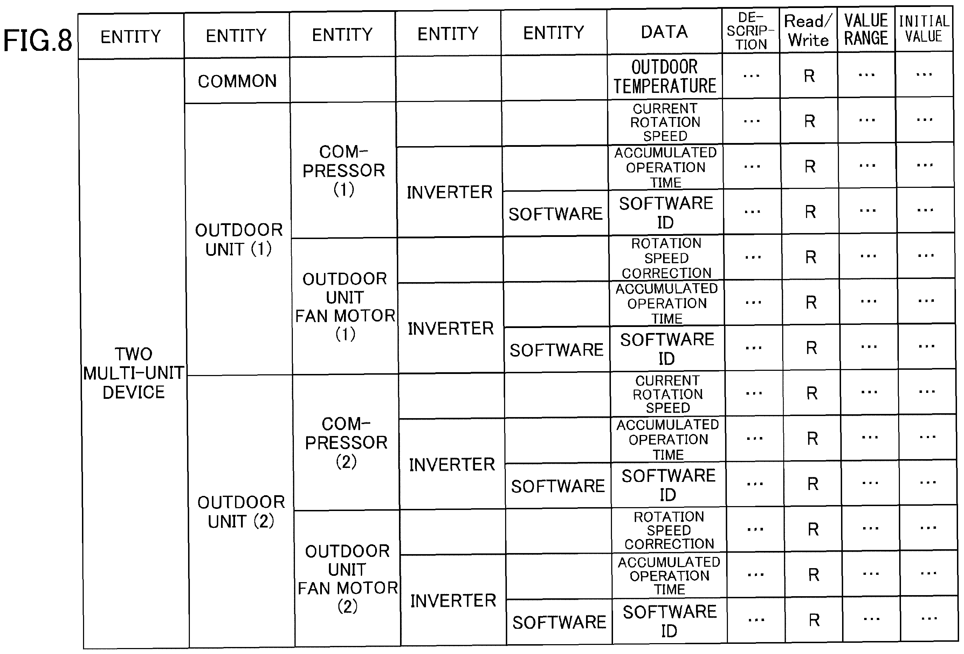

FIG. 8 is an example of a data model of an air conditioner having a plurality of outdoor units according to an embodiment of the present disclosure. As illustrated in FIG. 8, when the air conditioner 10 has a plurality of outdoor units (in the example of FIG. 8, the outdoor unit (1) and the outdoor unit (2)) and one or more indoor units, the plurality of data models acquired from the plurality of outdoor units are managed as one data model.

As illustrated in FIG. 8, the common data ("outdoor temperature" stored in "data" in FIG. 8) acquired from the plurality of outdoor units (in the example of FIG. 8, the outdoor unit (1) and the outdoor unit (2)) is managed as one data model.

As illustrated in FIG. 8, the data structure of the data ("outdoor temperature", "current rotation speed", "accumulated operation time", "software ID", "rotation speed correction", "accumulated operation time", and "software ID" stored in "data" of FIG. 8) collected by the air conditioner 10 is in accordance with the physical structure of at least one of a component of the air conditioner 10 or a sensor attached to the air conditioner 10 (each "entity" in FIG. 8).

Specifically, the data model indicates that the "outdoor unit (1)" of the upper level has a "compressor (1)" and an "outdoor unit fan motor (1)" in the lower level. The data model indicates that the "compressor (1)" and the" outdoor unit fan motor (1)" each have an "inverter" in the lower level, and the "inverter" has "software " in the lower level. The data model indicates that the "software" collects the "software ID" in the lower level.

Further, the data model indicates that the "outdoor unit (2)" of the upper level includes the "compressor (2)" and the "outdoor unit fan motor 2" in the lower level. Further, the data model indicates that the "compressor (2)" and the "outdoor unit fan motor 2" each include the "inverter" in the lower level, and the "inverter" includes the "software" in the lower level. Further, the data model indicates that the "software" collects the "software ID" in the lower level.

Data items in the data model include data acquired by various sensors (intake temperature, discharge temperature, outdoor temperature, indoor temperature, CO₂ concentration, etc.), various settings (cooling set temperature, heating set temperature, compressor frequency, valve opening/closing, fan rotation speed, etc.), and start/stop information of each air conditioner (compressor, valve, 4-section valve, indoor fan, outdoor fan, etc.). A data structure and attribute information of data are defined for each of a rule when the terminal 20 outputs data and a rule when the terminal 20 acquires data.

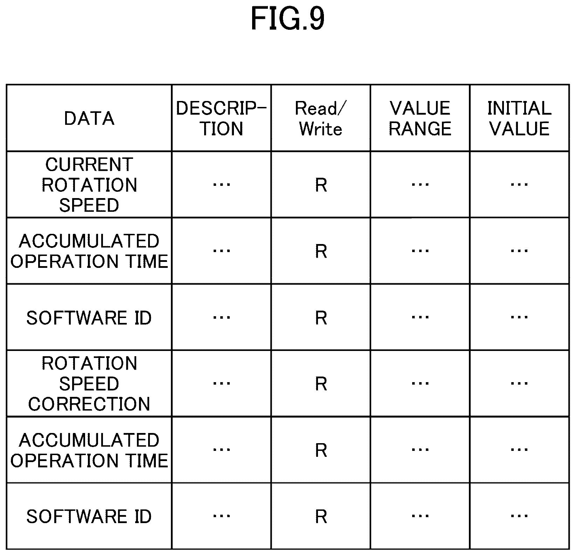

FIG. 9 is an example of a data model of the air conditioner 10 according to an embodiment of the present disclosure. In an embodiment of the present disclosure, the data structure may be a collection of items of data collected by the air conditioner 10. In this case, the data model is information indicating a collection of items of data collected by the air conditioner 10, as illustrated in FIG. 9 (in the example of FIG. 9, the current rotation speed, the accumulated operation time, the software ID, the rotation speed correction, the accumulated operation time, and the software ID).

Thus, in one embodiment of the present disclosure, the developer or the like of the air conditioner need not register the data model in the server every time the air conditioner is developed. In another embodiment of the present disclosure, the data model of various combinations of multiple units actually installed in the property (for example, a two multi-unit device (when the air conditioner 10 has two outdoor units), a three multi-unit device (when the air conditioner 10 has three outdoor units), ..., a multi-unit device of multiple models (when the air conditioner 10 has outdoor units of different models such as A and B), etc.) can be registered.

Although the embodiments have been described above, it will be understood that various changes in form and details can be made without departing from purpose and the scope of the claims.

The present international application is based upon and claims priority to Japanese Patent Application No. No. 2021-114549 filed on July 9, 2021, the entire contents of which are incorporated herein by reference.

### Reference Signs List

1 air conditioning system
10 air conditioner
11 heat source side device
12 usage side device
20 terminal (communication adapter)
30 server
201 control unit
202 communication device
203 storage device
301 control unit
302 ROM
303 RAM
304 auxiliary storage device
305 display device
306 operation device
307 I/F device
308 drive device
309 storage medium

## Claims

1. A system comprising:
an air conditioner;
a terminal configured to communicate with the air conditioner; and
a server configured to communicate with the terminal, wherein
the terminal includes a control unit configured to
acquire, from the air conditioner, a data model indicating a data structure of data collected by the air conditioner, and
transmit the data model to the server.

2. The system according to claim 1, wherein
the data is collected by at least one of a component included in the air conditioner or a sensor attached to the air conditioner, and
the data structure is a tree structure in accordance with a structure of at least one of the component or the sensor.

3. The system according to claim 1 or 2,
wherein the data model indicates attribute information of the data.

4. The system according to any one of claims 1 to 3, wherein the server includes a database for managing the data model.

5. The system according to claim 4, wherein the control unit of the server determines whether the data model received from the terminal is stored in the database.

6. The system according to claim 5, wherein the control unit of the server registers, in the database, the data model received from the terminal, when the data model received from the terminal is not stored in the database.

7. The system according to any one of claims 1 to 6, wherein
the air conditioner includes a plurality of outdoor units and one or more indoor units, and
the control unit of the terminal or a control unit of the server manages a plurality of the data models acquired from the plurality of outdoor units, as one data model.

8. The system according to claim 7, wherein the control unit of the terminal or the control unit of the server manages data common among the plurality of the data models acquired from the plurality of outdoor units, as one piece of data.

9. A server comprising:
a control unit, wherein
the control unit receives, from a terminal, a data model indicating a data structure of data collected by an air conditioner.

10. A method executed by a system, the system including an air conditioner, a terminal, and a server, the method comprising:
a step of acquiring, by the terminal from the air conditioner, a data model indicating a data structure of data collected by the air conditioner;
a step of transmitting, by the terminal, the data model to the server; and
a step of receiving, by the server, the data model from the terminal.
